(19) Europäisches Patentamt
European Patent Office
Office européen des brevets

(11) **EP 4 604 187 A1**

(12) **EUROPEAN PATENT APPLICATION**
published in accordance with Art. 153(4) EPC

(43) Date of publication:
**20.08.2025 Bulletin 2025/34**

(21) Application number: **24883557.1**

(22) Date of filing: **06.11.2024**

(51) International Patent Classification (IPC):
**H01M 4/00** $^{(2006.01)}$      **H01M 10/00** $^{(2006.01)}$

(52) Cooperative Patent Classification (CPC):
**H01M 4/36; H01M 4/525; H01M 10/0525;**
**Y02E 60/10**

(86) International application number:
**PCT/CN2024/130285**

(87) International publication number:
**WO 2025/124016 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.12.2023 CN 202311706975**

(71) Applicant: **BTR (Jiangsu) New Material
Technology Co., Ltd
Changzhou, Jiangsu 213200 (CN)**

(72) Inventors:
• **YOU, Hairui
Changzhou, Jiangsu 213200 (CN)**

• **SONG, Xiong
Changzhou, Jiangsu 213200 (CN)**
• **ZHANG, Jinlong
Changzhou, Jiangsu 213200 (CN)**
• **WU, Xiaozhen
Changzhou, Jiangsu 213200 (CN)**
• **YANG, Shunyi
Changzhou, Jiangsu 213200 (CN)**

(74) Representative: **Novagraaf Technologies
Bâtiment O2
2, rue Sarah Bernhardt
CS90017
92665 Asnières-sur-Seine Cedex (FR)**

(54) **POSITIVE ELECTRODE MATERIAL AND PREPARATION METHOD THEREFOR, AND
SECONDARY BATTERY**

(57)    Provided is a cathode material and a preparation method therefor, and a secondary battery. The cathode material is a lithium nickel cobalt oxide composite oxide. In an XRD pattern of the cathode material, a characteristic peak of a crystal face (104) includes a (104)-K$\alpha$1 diffraction peak and a (104)-K$\alpha$2 diffraction peak after peak splitting, a separation value between the (104)-K$\alpha$1 diffraction peak and the (104)-K$\alpha$2 diffraction peak is $\alpha$, and $0.7 \leq \alpha \leq 2.0$. The cathode material has suitable particle size, good particle strength and sufficient internal defects, which are conducive to reducing the phenomenon of polarization of the cathode material, such that the secondary battery based on the cathode material has both better cycle stability and rate performance.

FIG. 1

**Description**

**Technical Field**

The present application relates to the technical field of cathode materials, in particular to a cathode material and a preparation method therefor, and a secondary battery.

**Background**

Lithium-ion batteries have been widely used in notebook computers, mobile phones, digital products and other fields due to the advantages of high energy density, good safety performance, long cycle life and environmental friendliness. The development of high-capacity and high-voltage cathode materials is conducive to increasing the energy density of the lithium-ion batteries, thereby meeting more market demands.

It is generally believed that the increase of nickel content in ternary cathode materials can increase the capacity of the cathode materials. However, the increase of nickel content will increase the degree of side reactions between the materials and electrolyte solutions. In addition, with the increase of the charge-discharge degree, the degree of grain expansion or contraction of the cathode materials and the internal stress are increased, leading to easy cracking and pulverization of particles of the cathode materials, thus affecting the cycle life and safety performance of the batteries. Furthermore, as the existing cathode materials have relatively few internal defects, the diffusion of lithium ions in a charge-discharge process is not facilitated in the case of a relatively large particle size, leading to serious electrochemical and concentration polarization phenomena, thus affecting the electrical performance of the batteries.

**Summary**

To solve at least one of the above problems, it is necessary to provide a cathode material.

In addition, it is also necessary to provide a secondary battery with the aforementioned cathode material.

In a first aspect, the present application provides a cathode material. The cathode material is a lithium nickel cobalt oxide composite oxide. In an XRD pattern of the cathode material, a characteristic peak of a crystal face (104) includes a (104)-K$\alpha$1 diffraction peak and a (104)-K$\alpha$2 diffraction peak after peak splitting, a separation value between the (104)-K$\alpha$1 diffraction peak and the (104)-K$\alpha$2 diffraction peak is $\alpha$, and $0.7 \leq \alpha \leq 2.0$.

In a second aspect, the present application provides a method for preparing a cathode material. The preparation method includes: mixing a nickel-cobalt hydroxide with a lithium source to obtain a mixture; and subjecting the mixture to primary sintering and pulverization to obtain a cathode material. The primary sintering includes N stepwise heating stages and M constant temperature stages that are sequentially carried out, N is greater than or equal to 3, and M is greater than or equal to 1. The stepwise heating stages include n heating sub-stages, n is greater than or equal to 2, a heating rate of the n-th heating sub-stage is greater than that of the 1st heating sub-stage in the same stepwise heating stage, and the heating rate of the n-th heating sub-stage is a non-negative value.

In a third aspect, the present application provides a secondary battery. The secondary battery includes the cathode material as described in the first aspect or a cathode material prepared by the preparation method as described in the second aspect.

In the present application, the resolution $\alpha$ of the above two diffraction peaks of the cathode material is within a preset range. On the one hand, convenience is provided for controlling the particle size of the cathode material, shortening the diffusion distance of lithium ions and reducing the risk of deterioration of the capacity or rate performance in the secondary battery. Meanwhile, the cathode material can maintain good particle strength to improve the resistance to cracking or pulverization of the cathode material under the condition of high rolling pressure or high-voltage window, thereby improving the cycle performance of the cathode material. On the other hand, as the resolution $\alpha$ of the above two diffraction peaks of the cathode material is within the preset range, convenience is also provided for increasing internal defects of particles of the cathode material, enriching a diffusion path of lithium ions and increasing the diffusion rate of lithium ions, such that the degree of delithiation/lithiation of interiors of the particles of the cathode material is more similar to that of surface layers, thereby improving the phenomenon of polarization between the surface layers and interiors of the particles of the cathode material. Therefore, by controlling the resolution $\alpha$ of the above two diffraction peaks within the preset range in the present application, the particle size of the cathode material is controlled, meanwhile the particle strength of the cathode material is improved, and the internal defects of the material are increased, such that the cathode material has better cycle stability and rate performance.

In the method for preparing a cathode material in the present application, by setting the above stepwise heating stages and the constant temperature stages in the process of primary sintering, in the stepwise heating stages, the heating rate of the 1st sub-stage is relatively lower, which is conducive to maintaining a stable growth rate of particles and achieving a more uniform size of particles; meanwhile, the heating rate of the last sub-stage is relatively higher, which is conducive to increasing the growth rate of particles and increasing the internal defects of particles; and in the constant temperature stages, some internal defects of the particles can be repaired with the growth of single crystal particles, and the internal intergranular stress of the particles is gradually released, thereby facilitating the improvement of resistance to cracking or pulverization of the particles. Therefore, the method for preparing a cathode material provided in the present application can control the particle size, particle strength and internal defects of the cathode material, which is conducive to improving the cycle stability and rate performance of the cathode material.

**Brief Description of the Drawings**

FIG. 1 is a structural schematic diagram of a secondary battery provided in the present application during discharge.

FIG. 2 is a structural schematic diagram of a secondary battery provided in the present application during charge.

FIG. 3 is a temperature curve diagram of primary sintering in a method for preparing a cathode material provided in Example 1 of the present application.

FIG. 4 is a peak splitting schematic diagram of a characteristic peak of a crystal face (104) of a cathode material provided in Example 1 of the present application.

Description of main component symbols

| | |
|---|---|
| positive electrode plate | 110 |
| positive current collector | 111 |
| active cathode material layer | 112 |
| negative electrode plate | 120 |
| negative current collector | 121 |
| active anode material layer | 122 |
| diaphragm | 130 |
| lithium ion | 140 |

**Detailed Description of the Embodiments**

To make the technical solutions of the present application better understood, the present application is further illustrated in detail below. It should be clear that the examples described below are merely a part of examples of the present application, rather than all of the examples. The examples described below are only simple instances of the present application without representing or limiting the scope of protection of the rights of the present application. The scope of protection of the present application is defined by the claims. Based on the examples in the present application, all other examples obtained by those of ordinary skill in the art without exerting creative effort fall within the scope of protection of the present application.

In addition, the terms "first" and "second" are used merely for the purpose of description and shall not be construed as indicating or implying relative importance or implicitly indicating a quantity of indicated technical features. Therefore, the features restricted by the "first" or "second" may explicitly or implicitly include one or more of the features.

To make the present application easily understood, specific terms are properly defined in the present application. Unless otherwise defined herein, all technical terms and scientific terms used in the present application have meanings as those generally understood by persons skilled in the field to which the present application belongs.

The present application provides a cathode material. The cathode material is a lithium nickel cobalt oxide composite oxide. In an X-ray diffraction (XRD) pattern of the cathode material, a characteristic peak of a crystal face (104) includes a (104)-K$\alpha$1 diffraction peak and a (104)-K$\alpha$2 diffraction peak after peak splitting, a separation value between the (104)-K$\alpha$1 diffraction peak and the (104)-K$\alpha$2 diffraction peak is $\alpha$, and $0.7 \leq \alpha \leq 2.0$. For example, $\alpha$ may be 0.7, 0.75, 0.8, 0.82, 0.85, 0.88, 0.90, 0.95, 0.98, 1.0, 1.05, 1.08, 1.1, 1.15, 1.2, 1.3, 1.4, 1.58, 1.6, 1.8, 2.0, or any value within a range consisting of any two of the above numerical values.

In the present application, the resolution $\alpha$ of the above two diffraction peaks of the cathode material is within a preset range. On the one hand, convenience is provided for controlling the particle size of the cathode material, shortening the diffusion distance of lithium ions, increasing the diffusion coefficient of lithium ions and improving the electrochemical polarization and concentration polarization of the cathode material. In this way, the phenomenon of increase of charge internal resistance (DCR) of a secondary battery at a high state of charge (SOC) or increase of discharge internal resistance at a low state of charge can be improved, and the lower internal resistance is conducive to maintaining a higher capacity of the secondary battery. Therefore, in the above solution, the risk of deterioration of the capacity or rate performance in the secondary battery can be reduced by setting the resolution $\alpha$ within the preset range. Meanwhile, the cathode material can maintain good particle strength to improve the resistance to cracking or pulverization of the cathode material under the condition of high rolling pressure or high-voltage window, thereby improving the cycle performance of the cathode material. On the other hand, as the resolution $\alpha$ of the above two diffraction peaks of the cathode material is within the preset range, convenience is also provided for increasing internal defects of particles of the cathode material, enriching a diffusion path of lithium ions and increasing the diffusion rate of lithium ions, such that the degree of delithiation/lithiation of interiors of the particles of the cathode material is more similar to that of surface layers, thereby improving the phenomenon of polarization between the surface layers and interiors of the particles of the cathode material. Therefore, by controlling the particle size, improving the particle strength and increasing the internal defects of the material, the cathode material provided in the present application has better cycle stability and rate performance.

In the art, the separation value $\alpha$ between the (104)-K$\alpha$1 diffraction peak and the (104)-K$\alpha$2 diffraction peak after peak splitting is related to the peak position (Q) and full width at half maximum (FWHM) of (104)-K$\alpha$1 and (104)-K$\alpha$2:

$$\alpha = \frac{2 \times (Q2 - Q1)}{FWHM1 + FWHM2};$$

Therefore, when the resolution $\alpha$ of the above two diffraction peaks is too small, for example, less than 0.7, it means that the full width at half maximum of the two diffraction peaks is too large in the case of basically a certain peak position, that is, the particle size of the cathode material is too small according to the Scherrer formula of an XRD mechanism, and it further means that the number of primary particles forming secondary particles is increased, that is, the number of grain boundaries is increased. Such phenomenon will lead to decrease of the particle strength, the secondary particles are more prone to crushing and pulverization in electrode plate rolling and particle charge-discharge processes, and the cycle performance and other performance of the material are finally affected. Such phenomenon will also lead to increase of the number of internal voids and hole structures of the particles of the cathode material, leading to decrease of the tap density of the material. In addition, when the primary particle size of the material is smaller, a lattice ordered structure is also shorter, and defects, such as dislocations and layer faults, in lattices are more likely to be improved by atomic rearrangement in a high temperature solid phase reaction and are more likely to be discharged to the outsides of grains. Meanwhile, the smaller primary particle size is generally caused by a lower temperature of the high temperature solid phase reaction, the production of grains is relatively slow at the low temperature, and it is more difficult to introduce internal defects. Therefore, when the primary particle size of the material is smaller, the number of internal defects of the grains will also be decreased, leading to decrease of the diffusion path of lithium ions, increase of differences in the degrees of delithiation/lithiation of the surface layers and interiors of the particles of the cathode material, increase of the phenomenon of polarization of the cathode material and decrease of the cycle life of the cathode material.

On the contrary, when the resolution $\alpha$ of the above two diffraction peaks is too large, for example, greater than 2.0, the particle size of the cathode material is too large, the diffusion path of lithium ions is increased, and the migration of lithium ions in the particles is not facilitated, leading to increase of the phenomena of concentration polarization and electrochemical polarization of the cathode material, followed by deterioration of the capacity and rate performance of a secondary battery. Therefore, when the resolution $\alpha$ of the above two diffraction peaks is controlled within the above range, the cathode material can have appropriate particle size, better particle strength and more internal defects, thereby having better cycle performance and capacity rate performance.

In some examples, the lithium nickel cobalt oxide composite oxide includes a lithium nickel-cobalt-manganese oxide or a lithium nickel-cobalt-aluminum oxide.

In some examples, a tap density of the cathode material is T g/cm$^3$, a median particle size $D_{50}$ of the cathode material is P $\mu$m, and $1 \leq T - (1.04\alpha - 0.25\alpha^2 + 0.004P^2 - 0.02P) \leq 1.5$.

In related technologies, the cycle stability and rate performance of the cathode material are generally balanced by controlling a relationship between the tap density T and the particle size $D_{50}$, and it is difficult to balance electrical performance indicators without considering the impact of the resolution $\alpha$ on the electrochemical performance of the cathode material. For example, when the cathode material with higher tap density and lower particle size $D_{50}$ is selected to obtain higher energy density, the rate performance of the cathode material is low. Meanwhile, when the cathode material with lower tap density and higher particle size $D_{50}$ is selected to obtain higher rate performance, the energy density and cycle stability of the cathode material are low.

Based on proposing that the resolution $\alpha$ is controlled within the preset range, the present application further proposes a relationship between the tap density T, particle size $D_{50}$ and resolution $\alpha$ of the cathode material. When the relationship between the three is within the above range and when the cathode material with higher tap density and lower $D_{50}$ is selected to obtain higher energy density, the resolution $\alpha$ is controlled to be increased appropriately within the preset range (not higher than 2.0), such that the number of internal defects of the particles of the cathode material is increased, and the diffusion path of lithium ions is increased, thereby compensating or improving the rate performance of the cathode material. Meanwhile, when the cathode material with lower tap density and greater $D_{50}$ is selected to obtain higher rate performance, the resolution $\alpha$ is controlled to be decreased appropriately within the preset range (not lower than 0.7), such that the particle size of the cathode material is decreased, but the particle strength is still maintained good, and the risk of cracking or pulverization of the cathode material under high rolling pressure or high-voltage window can be reduced, thereby compensating or improving the cycle stability of the cathode material. Therefore, in the above solution, the energy density, particle strength and defect degree of the material can be balanced by controlling the relationship between the tap density T, particle size $D_{50}$ and resolution $\alpha$ of the cathode material within the above preset range, such that the cathode material has both better cycle stability and rate performance.

In some examples, a gram capacity of the cathode material is C mAh/g, a molar proportion of element Ni in all metallic elements except for element Li in the cathode material is $n_{Ni}$, and $125 \leq C - (100 n_{Ni} - \alpha^2 P) \leq 135$. By controlling the cathode material to meet the above relation formula, the particle strength of the cathode material can be improved, and the phenomenon of polarization of the cathode material can be reduced, such that the cathode material has both better gram capacity and cycle stability.

In related technologies, cathode material products with different gram capacities are generally obtained by controlling the content nNi of element Ni without fully considering the impact of the resolution $\alpha$ and particle size $D_{50}$ on other electrochemical performance of the cathode material. For example, when the cathode material with higher Ni content and lower $D_{50}$ is selected to obtain higher energy density, the disadvantage of decrease of the cycle performance and high-temperature gas production performance of the cathode material is caused. In the present application, various electrochemical properties are balanced by associating the Ni content nNi, the resolution $\alpha$ and the particle size $D_{50}$, establishing the above relation formula and setting the above preset range. Based on the solutions of the present application, similarly, when higher Ni content is selected to obtain a multi-component material with higher energy density, the product of the resolution $\alpha^2$ and the particle size $D_{50}$ needs to be increased to control the value of the relation formula within the preset range (the two, namely the resolution $\alpha$ and the particle size $D_{50}$, can be increased simultaneously or separately). The increase of the resolution $\alpha$ (not higher than 2.0) means that the full width at half maximum is decreased, that is, the primary particle size of the material is increased, the number of grain boundaries is decreased, the stress caused by grain expansion/contraction of the multi-component material in a charge-discharge cycle process is reduced, the particle strength is increased, and the cycle performance of the material is guaranteed. When the particle size $D_{50}$ is increased, the specific surface area of the material is greatly decreased, the degree of side reactions with an electrolyte solution is decreased, and the cycle stability is improved, thereby being conducive to overcoming the shortcomings of related technologies. In addition, it should be noted that one of the resolution $\alpha$ and the particle size $D_{50}$ can also be increased while the other one can be decreased, only ensuring that the value of $\alpha^2 P$ is increased. It can also be seen that the resolution $\alpha$ is in a square relationship, which is more critical to ensuring the cycle performance, storage performance and other performance while ensuring the increase of gram capacity. Therefore, in the above solution, the gram capacity, primary particle size, particle strength, specific surface area and the like of the material can be balanced by controlling the relationship between the gram capacity C, particle size $D_{50}$ and resolution $\alpha$ of the cathode material within the above preset range, such that the cathode material has both better gram capacity and cycle stability.

In some examples, a cycle life number of the cathode material is L, and $1800 \leq L - (2245\alpha - 5000 n_{Ni} + 100 P) \leq 2400$. By controlling the cathode material to meet the above relation formula, the particle strength of the cathode material can be improved, and the phenomenon of polarization of the cathode material can be reduced, such that the cathode material has both better cycle stability and gram capacity.

In related technologies, cathode material products with different cycle lives are generally obtained by controlling the size of $D_{50}$ and the Ni content without fully considering the impact of the resolution $\alpha$ on the cycle life and other electrochemical performance of the cathode material. For example, when the cathode material with lower Ni content and higher $D_{50}$ is selected to obtain longer cycle life, the disadvantage of decrease of the capacity and rate performance of the cathode material is caused. In the present application, various electrochemical properties are balanced by associating the Ni content nNi, the resolution $\alpha$ and the particle size $D_{50}$, establishing the above relation formula and setting the above preset range. Based on the solutions of the present application, similarly, when the cathode material with lower Ni content and higher $D_{50}$ is selected to obtain longer cycle life, the value of the resolution $\alpha$ needs to be decreased to control the value of the relation formula within the preset range. The decrease of the resolution $\alpha$ (not lower than 0.7) means that the full width at half maximum is increased, that is, the primary particles of the material are decreased, the diffusion path of lithium ions is shortened, meanwhile the internal defects of the particles of the material are not too small, and the capacity and rate performance of the material are guaranteed, thereby being conducive to overcoming the shortcomings of related technologies. Therefore, in the above solution, the internal defects, primary particle size and the like of the material can be balanced by controlling the relationship between the cycle life L, Ni content $n_{Ni}$, particle size $D_{50}$ and resolution $\alpha$ of

the cathode material within the above preset range, such that the cathode material has both better gram capacity, rate and cycle stability.

In some examples, the tap density of the cathode material is T g/cm$^3$, and $1.7 \leq T \leq 2.5$. For example, T may be 1.7, 1.8, 1.9, 2.0, 2.1, 2.2, 2.3, 2.4, 2.5, or any value within a range consisting of any two of the above numerical values. The tap density of the cathode material is one of indicators to measure the energy density of the material. When the tap density of the cathode material is too large, a positive electrode plate is too dense, and the infiltration of the positive electrode plate in an electrolyte solution is not facilitated, leading to blocked lithiation of lithium ions, such that the rate performance of a battery is decreased. When the tap density of the cathode material is too low, the energy density of the material will be decreased. By controlling the tap density of the cathode material within the above range, convenience is provided for the cathode material to achieve both high energy density and excellent rate performance.

In some examples, the median particle size $D_{50}$ of the cathode material is P μm, and $3 \leq P \leq 16$. For example, P may be 3, 4, 5, 8, 10, 12, 15, 16, or any value within a range consisting of any two of the above numerical values. The median particle size $D_{50}$ represents the corresponding material particle size when the cumulative particle size distribution percentage reaches 50% by volume. When the $D_{50}$ of the cathode material is smaller, the particle size is smaller, the tap density is lower, the specific surface area is large, serious side reactions between particle surfaces and an electrolyte solution are likely to be caused, and the safety and the cycle life are decreased. When the $D_{50}$ of the cathode material is larger, the particle size is larger, the internal stress of particles is increased, and meanwhile the electrochemical polarization and concentration polarization of lithium ions inside and outside particles are intensified, leading to decrease of the capacity and rate performance of the cathode material. By controlling the $D_{50}$ of the cathode material within the above range, convenience is provided for the cathode material to maintain better compaction density, gram capacity and cycle life.

In some examples, the gram capacity of the cathode material is C mAh/g, and $140 \leq C \leq 230$. For example, C may be 140, 160, 170, 180, 190, 200, 210, 220, 230, or any value within a range consisting of any two of the above numerical values. It should be noted that the gram capacity of the cathode material refers to the discharge capacity of a full battery made of the cathode material under the conditions of 0.33 C/0.33 C@3.0 V-4.3 V at 25 °C. By controlling the gram capacity within the above range, convenience is provided for the cathode material to maintain better energy density and cycle life. Preferably, $170 \leq C \leq 220$.

In some examples, the molar proportion of element Ni in all metallic elements except for element Li in the cathode material is $n_{Ni}$, and $0.33 \leq n_{Ni} \leq 1$. For example, $n_{Ni}$ may be 0.33, 0.45, 0.5, 0.55, 0.6, 0.65, 0.7, 0.8, 0.9, 1, or any value within a range consisting of any two of the above numerical values. By controlling $n_{Ni}$ within the above range, convenience is provided for controlling the gram capacity of the cathode material within a suitable range and improving the energy density of a lithium-ion battery. Meanwhile, the increase of cobalt content caused by the decrease of $n_{Ni}$ can be reduced, which is conducive to controlling the production cost and improving the cost performance per unit energy density.

In some examples, the cycle life number of the cathode material is L, and $300 \leq L \leq 6000$. For example, L may be 300, 500, 600, 800, 1,100, 1,200, 1,500, 1,600, 1,700, 1,800, 2,100, 2,200, 2,400, 2,500, 2,900, 3,000, 3,500, 3,900, 4,000, 4,500, 6,000, or any value within a range consisting of any two of the above numerical values. It should be noted that when a full battery made of the cathode material is in charge-discharge cycle under the conditions of 1 C/1 C@3.0 V-4.3 V at 25 °C until the capacity retention rate reaches 80%, the number of cycles is recorded as the cycle life number L. By controlling L within the above range, convenience is provided for the cathode material to achieve better energy density and cycle life. L is a measured value corresponding to the cycle life of a lithium-ion battery, which is greatly affected by $n_{Ni}$ and is also closely related to the particle size $D_{50}$ and the resolution $\alpha$. When the particle size $D_{50}$ and the resolution $\alpha$ fluctuate to make the L value fall out of the above range, the cycle life of a battery is too low, thereby affecting the practicality. To achieve both the energy density and practicality of the cathode material, preferably, $1000 \leq L \leq 4000$.

In some examples, a general chemical formula of the cathode material is $Li_aNi_xCo_yM1_zM2_kO_2$, M1 includes one or two of Mn and Al, M2 includes one or more of Ni, Co, Mn, Na, K, Mg, Ca, Sr, Al, Ti, Y, Zr, W, Nb, Ce, La, and Dy, $0.9 < a \leq 1.1$, $0.33 \leq x \leq 1$, $0 \leq y \leq 0.33$, $0 < z < 0.33$, $0 \leq k < 0.1$, and $x + y + z + k = 1$. It should be noted that based on the above general chemical formula of the cathode material, the molar proportion of element Ni in all metallic elements except for element Li is that $n_{Ni}=N_{Ni}/N_{Ni}+N_{Co}+N_{M1}+N_{M2}$. Wherein, $N_{Ni}$ is a molar mass of element Ni, $N_{Co}$ is a molar mass of element Co, $N_{M1}$ is a molar mass of element M1, and $N_{M2}$ is a molar mass of element M2. For example, a may be 0.9, 0.95, 0.98, 1.0, 1.01, 1.02, 1.03, 1.05, 1.1, or any value within a range consisting of any two of the above numerical values. x may be 0.33, 0.45, 0.5, 0.55, 0.6, 0.7, 0.8, 0.9, 1, or any value within a range consisting of any two of the above numerical values. y may be 0, 0.02, 0.05, 0.07, 0.08, 0.1, 0.15, 0.2, 0.25, 0.28, 0.30, 0.33, or any value within a range consisting of any two of the above numerical values. z may be 0.01, 0.06, 0.1, 0.15, 0.2, 0.25, 0.3, or any value within a range consisting of any two of the above numerical values. k may be 0, 0.001, 0.005, 0.01, 0.02, 0.05, 0.099, or any value within a range consisting of any two of the above numerical values. It should be noted that the contents of various elements in the cathode material can be determined by well-known instruments, such as ICP and ICP-MS, for qualitative analysis and/or quantitative analysis of various elements.

When M2 includes the above elements, these elements are doped in surface lattices of the cathode material, which is conducive to changing the lattice constant of the cathode material or the valence state of the material body elements, reducing cation mixing, improving the electronic conductivity and ionic conductivity of the material, improving the structural stability of the material and reducing the risk of structural collapse, thereby improving the cycle stability of the cathode material.

In some examples, the cathode material is analyzed by a scanning electron microscope. In a resulting scanning electron microscope image, it is shown that the cathode material is a single-crystal cathode material. The single-crystal cathode material has a more stable structure, a more uniform distribution of bulk phase components and better particle strength than a polycrystalline cathode material, which is conducive to providing better cycle stability and safety for a lithium-ion battery, and can also reduce particle cracking in an electrode plate pressing process and improve the compaction density and volume energy density of an electrode plate. It should be noted that the difference between the single-crystal cathode material and the polycrystalline cathode material (that is, a polycrystalline secondary particle) is that a smallest particle of the polycrystalline secondary particle is a secondary particle formed by agglomeration of a primary particle. A smallest particle of the single-crystal cathode material is usually a micron monomer primary particle. In general, in addition to EBSD testing means, characterization means, such as scanning electron microscope (SEM), can also be used for determining whether a resulting cathode product is a single-crystal material. For example, for the single-crystal cathode material, the morphology of single-crystal particles can be characterized by SEM. It can be seen that the shape of single-crystal particles is generally shown as a regular or irregular polyhedral shape without obvious agglomeration of particles. The orientation of the single-crystal cathode material can also be characterized by EBSD. It can be observed through EBSD that orientations in grains are the same, and the grains with the same orientation are single crystals. It should be particularly noted that the "single-crystal cathode material" well known to those skilled in the art are not strictly "single crystals". In crystallography, ideal single crystals are crystals with exactly the same arrangement and orientation. However, due to the limitations of impurities, strains and crystal defects, ideal single crystals are very rare and difficult to produce in a laboratory. Therefore, the single-crystal cathode material well known in the art is actually more like a cathode material with "single-crystal-like morphology", which only shows in the size that the large particle size of single-crystal-like crystals is different from that of polycrystals composed of many small primary particles.

In a second aspect, the present application provides a method for preparing a cathode material. The preparation method includes:

mixing a precursor with a lithium source to obtain a mixture; and subjecting the mixture to primary sintering and pulverization to obtain a cathode material. The primary sintering includes N stepwise heating stages and M constant temperature stages that are sequentially carried out, N is greater than or equal to 3, and M is greater than or equal to 1. The stepwise heating stages include n heating sub-stages, and n is greater than or equal to 2. When n is greater than 1, a heating rate of the n-th heating sub-stage is greater than that of the 1st heating sub-stage in the same stepwise heating stage, and the heating rate of the n-th heating sub-stage is a non-negative value.

It is found through research in the present application that by setting the multiple stepwise heating stages and setting a difference value between the heating rate of the first sub-stage and the heating rate of the last sub-stage, the resolution $\alpha$ of the cathode material can be better controlled to fall within the preset range. It can be understood that when the heating rate is higher, the particle growth rate is changed rapidly, the particle size is non-uniform, and the number of internal defects of particles is increased. When the heating rate is lower, the growth of particles tends to be stable, the particle size is uniform, and some internal defects of particles are repaired with the growth of single crystals. In alternating change of the high and low heating rate, the situations of internal stress and defect number of grains can be taken into account, such that the cathode material neither has insufficient particle strength and easy cracking due to too large internal stress, nor has decreased diffusion path of $Li^+$ and intensified polarization due to insufficient internal defects.

Therefore, in the method for preparing a cathode material in the present application, by setting the above stepwise heating stages and the constant temperature stages in the process of primary sintering, in the stepwise heating stages, the heating rate of the 1st sub-stage is relatively lower, which is conducive to maintaining a stable growth rate of particles and achieving a more uniform size of particles; meanwhile, the heating rate of the last sub-stage is relatively higher, which is conducive to increasing the growth rate of particles and increasing the internal defects of particles; and in the constant temperature stages, some internal defects of the particles can be repaired with the growth of particles, and the internal intergranular stress of the particles is gradually released, thereby facilitating the improvement of resistance to cracking or pulverization of the particles. Therefore, the method for preparing a cathode material provided in the present application can control the particle size, particle strength and internal defects of the cathode material, which is conducive to improving the cycle stability and rate performance of the cathode material.

In some examples, a maximum temperature of the stepwise heating stages is 700 °C to 1,000 °C. For example, the maximum temperature of the stepwise heating stages may be 700 °C, 800 °C, 850 °C, 900 °C, 950 °C, 980 °C, 1,000 °C, or any value within a range consisting of any two of the above numerical values.

In some examples, a time of the stepwise heating stages is 6 h to 14 h. For example, the time of the stepwise heating stages may be 6 h, 7 h, 8 h, 9 h, 10 h, 12 h, 14 h, or any value within a range consisting of any two of the above numerical values.

In some examples, a sintering temperature of the constant temperature stages is $(1150 - 500n_{Ni})$ °C to $(1150 - 280n_{Ni})$ °C, $n_{Ni}$ represents the molar proportion of element Ni in all metallic elements except for element Li in the cathode material, and $0.33 \leq n_{Ni} \leq 1$. It should be noted that based on the above general chemical formula of the cathode material, the molar proportion of element Ni in all metallic elements except for element Li is that $n_{Ni} = N_{Ni}/N_{Ni} + N_{Co} + N_{M1} + N_{M2}$. Wherein, $N_{Ni}$ is a molar mass of element Ni, $N_{Co}$ is a molar mass of element Co, $N_{M1}$ is a molar mass of element M1, and $N_{M2}$ is a molar mass of element M2.

The constant temperature stages may be carried out at a constant temperature for a period of time, or may be composed of multiple reciprocating temperature stages. In some examples, the constant temperature stages include cooling sub-stages and heating sub-stages that are alternately carried out, and a temperature of the cooling sub-stages in the constant temperature stages is lower than that of the adjacent heating sub-stages.

In some examples, the mixture further includes a dopant, and elements of the dopant include one or more of Ni, Co, Mn, Na, K, Mg, Ca, Sr, Al, Ti, Y, Zr, W, Nb, Ce, La, and Dy. For example, the dopant may be a salt or an oxide consisting of the above elements.

In some examples, after the pulverization in the preparation method, the method further includes: mixing a product of the primary sintering with a coating agent, and carrying out secondary sintering to obtain a cathode material. Elements of the coating agent include one or more of Ni, Co, Mn, Na, K, Mg, Ca, Sr, Al, Ti, Y, Zr, W, Nb, Ce, La, and Dy. For example, the coating agent may be a salt or an oxide consisting of the above elements. Alternatively preferably, the coating agent includes a compound of Co or a compound of W.

The preparation method of the present application is specifically introduced in combination with examples below.

In some examples, a general chemical formula of the cathode material precursor is $Ni_{a1}Co_{b1}M1_{c1}O_d$, wherein $0.33 \leq a1 \leq 1$, $0 \leq b1 \leq 0.33$, $0 \leq c1 < 0.33$, $4/3 \leq d \leq 3/2$, $a1+b1+c1=1$, and M1 includes one or two of Mn or Al.

In some examples, the general chemical formula of the cathode material precursor is $Ni_{a2}Co_{b2}M1_{c2}(OH)_2$, wherein $0.33 \leq a2 \leq 1$, $0 \leq b2 \leq 0.33$, $0 \leq c2 < 0.33$, $a2+b2+c2=1$, and M1 includes one or two of Mn or Al.

In some examples, a median particle size of the cathode material precursor is 3 μm to 18 μm. For example, the median particle size of the cathode material precursor may be 3 μm, 4 μm, 5 μm, 7 μm, 8 μm, 10 μm, 12 μm, 15 μm, 18 μm, or any value within a range consisting of any two of the above numerical values.

In some examples, the lithium source includes at least one of lithium hydroxide, lithium carbonate, lithium oxide, lithium nitrate, lithium acetate, lithium sulfate, and lithium oxalate.

In some examples, addition amounts of the lithium source and the cathode material precursor meet that a ratio of a molar amount of Li to a total molar amount of all metals in the cathode material precursor is (0.9-1.1):1. For example, the above ratio may be 0.9:1, 0.95:1, 0.98:1, 1:1, 1.02:1, 1.05:1, 1.1:1, or any value within a range consisting of any two of the above numerical values. In the above range, not only can the Li/Ni cation mixing degree be decreased, but also excessive residual lithium on a surface of a sintered material can be reduced and prevented from affecting the processing performance and safety performance.

In some examples, an addition amount of the dopant is controlled, such that a ratio of a molar amount of M2 in the prepared cathode material to a total molar amount of transition metals is (0-0.1):1. For example, the above ratio may be 0.01:1, 0.02:1, 0.05:1, 0.07:1, 0.08:1, 0.09:1, 0.1:1, or any value within a range consisting of any two of the above numerical values.

In some examples, the mixing includes solid phase mixing, and a method of the solid phase mixing may be dry grinding or ball milling, etc., which is not limited herein, provided that various components are evenly mixed.

In some examples, a device of the mixing may include one or more of a ball mill, a three-dimensional mixer, a high-speed mixer, a coating machine, and a VC mixer.

In some examples, the primary sintering is carried out in an oxygen-containing atmosphere, and a volume content of oxygen in the oxygen-containing atmosphere is greater than or equal to 20%. For example, the volume content of oxygen in the oxygen-containing atmosphere may be 20%, 30%, 40%, 50%, 60%, 70%, 80%, 100%, or any value within a range consisting of any two of the above numerical values. To carry out a reaction adequately, preferably, the volume content of oxygen in the oxygen-containing atmosphere is greater than or equal to 90%.

In some examples, a method of the pulverization includes one or more of a roller mill, a plow blade mixer, a plow blade crusher, a jet mill, and a mechanical mill.

In some examples, a mass ratio of the coating agent to a product of the primary sintering is (0-0.1):1. For example, the above mass ratio may be 0:1, 0.002:1, 0.005:1, 0.01:1, 0.03:1, 0.05:1, 0.1:1, or any value within a range consisting of any two of the above numerical values.

In some examples, the secondary sintering is carried out in an oxygen-containing atmosphere, and a volume content of oxygen in the oxygen-containing atmosphere is greater than or equal to 20%. For example, the volume content of oxygen in the oxygen-containing atmosphere may be 20%, 30%, 40%, 50%, 60%, 70%, 80%, 100%, or any value within a range consisting of any two of the above numerical values.

In some examples, a temperature of the secondary sintering is 300 °C to 900 °C. For example, the temperature of the secondary sintering may be 300 °C, 380 °C, 450 °C, 550 °C, 600 °C, 700 °C, 750 °C, 800 °C, 840 °C, 900 °C, or any value within a range consisting of any two of the above numerical values.

In some examples, a heat preservation time of the secondary sintering is 6 h to 24 h. For example, the heat preservation time of the secondary sintering may be 6 h, 8 h, 10 h, 12 h, 15 h, 18 h, 24 h, or any value within a range consisting of any two of the above numerical values.

In some examples, the preparation method further includes subjecting a product of the secondary sintering to cooling, shaping, and sieving. The shaping includes one or more of pulverization, grinding, ball milling, and air crushing.

In some examples, a mesh number of a sieve mesh used for the sieving is 300 mesh to 400 mesh.

In a third aspect, the present application provides a secondary battery. The secondary battery includes the aforementioned cathode material or a cathode material prepared by the aforementioned preparation method.

The secondary battery includes a shell, an electrode assembly, and an electrolyte. The electrode assembly and the electrolyte are both located in the shell. The shell may be a packaging bag obtained by encapsulation with an encapsulating film (such as an aluminum-plastic film). For example, the secondary battery is a pouch battery. In other examples, the secondary battery may also be a steel shell battery, an aluminum shell battery, etc.

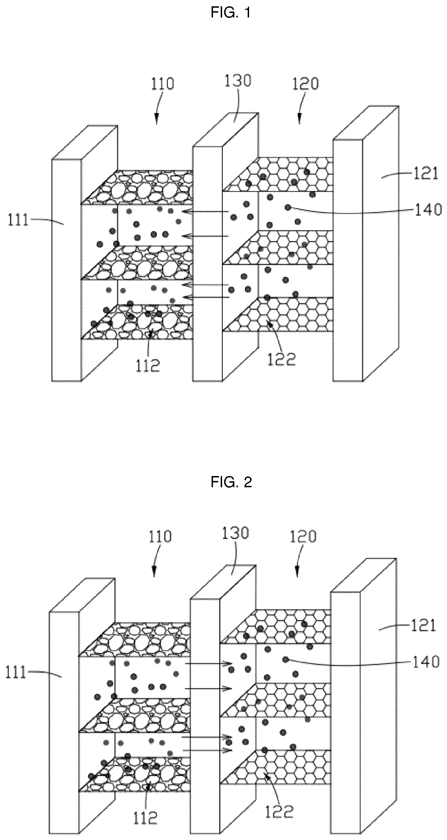

Referring to FIG. 1 and FIG. 2, the electrode assembly of the secondary battery includes a positive electrode plate 110, a negative electrode plate 120, and a diaphragm 130, and the diaphragm 130 is arranged between the positive electrode plate 110 and the negative electrode plate 120. The electrode assembly may be of a laminated structure, which is formed by sequentially and alternately laminating the positive electrode plate 110, the diaphragm 130, the negative electrode plate 120 and the diaphragm 130. In other examples, the electrode assembly may also be of a winding structure, which is formed by sequentially laminating and winding the positive electrode plate 110, the diaphragm 130, the negative electrode plate 120 and the diaphragm 130.

Positive electrode plate

The positive electrode plate 110 includes a positive current collector 111 and an active cathode material layer 112 arranged on at least one surface of the positive current collector 111. The positive current collector 111 may use aluminum foil or nickel foil, etc., and may also be any composite current collector disclosed in the prior art, such as, but not limited to, a current collector formed by combination of the aforementioned conductive foil and a polymer substrate. The active cathode material layer 112 includes the aforementioned cathode material.

The active cathode material layer 112 further includes a binder that is used for bonding active cathode material particles to facilitate the formation of a membrane layer and can also improve the binding force between the active cathode material layer and the positive current collector 111. In some examples, the binder may include, but is not limited to, at least one of polyvinyl alcohol, hydroxypropyl cellulose, diacetyl cellulose, polyvinyl chloride, carboxylated polyvinyl chloride, polyvinyl fluoride, ethylideneoxy-containing polymers, polyethylene pyrrolidone, polyurethane, polytetrafluoroethylene, poly(1,1-vinylidene difluoride), polyethylene, polypropylene, styrene-butadiene rubber, acrylic (ester) styrene-butadiene rubber, epoxy resin, or nylon, etc.

The active cathode material layer 112 may further include a conductive material, and the conductive material includes, but is not limited to, a carbon-based material, a conductive polymer, or any combination thereof. In some examples, the carbon-based material may include, but is not limited to, natural graphite, artificial graphite, carbon black, acetylene black, Ketjen black, carbon fiber, or any combination thereof. In some examples, the conductive polymer may be a polyphenylene derivative.

Negative electrode plate

The negative electrode plate 120 includes a negative current collector 121 and an active anode material layer 122 arranged on at least one surface of the negative current collector 121. The negative current collector 121 may use at least one of copper foil, nickel foil, stainless steel foil, titanium foil, or a carbon-based current collector, etc., and may also be any composite current collector disclosed in the prior art, such as, but not limited to, a current collector formed by combination of the aforementioned conductive foil and a polymer substrate. The active anode material layer 122 includes an anode material, and the anode material includes, but is not limited to, at least one of graphite, a mesocarbon microbead (MCMB), hard carbon, soft carbon, silicon, a silicon-carbon complex, SiOx (0.5<x<1.6), a Li-Sn alloy, a Li-SN-O alloy, Sn, SnO, $SnO_2$, lithium titanate with a spinel structure, lithiated $TiO_2\text{-}Li_4Ti_5O_{12}$, a Li-Al alloy, and metallic lithium.

The active anode material layer 122 further includes a binder that is used for bonding active anode material particles to facilitate the formation of a membrane layer and can also improve the binding force between the active anode material layer and the negative current collector 121. In some examples, the binder may include, but is not limited to, polyvinyl alcohol, hydroxypropyl cellulose, diacetyl cellulose, polyvinyl chloride, carboxylated polyvinyl chloride, polyvinyl fluoride, ethylideneoxy-containing polymers, polyethylene pyrrolidone, polyurethane, polytetrafluoroethylene, poly(1,1-vinylidene difluoride), polyethylene, polypropylene, styrene-butadiene rubber, acrylic (ester) styrene-butadiene rubber, epoxy resin, or nylon, etc.

The active anode material layer 122 may further include a conductive material, and the conductive material includes, but is not limited to, a carbon-based material, a metal-based material, a conductive polymer, or any combination thereof. In some examples, the carbon-based material may include, but is not limited to, natural graphite, artificial graphite, carbon black, acetylene black, Ketjen black, carbon fiber, or any combination thereof. In some examples, the metal-based material may include, but is not limited to, a metal powder or a metal fiber, such as copper, nickel, aluminum, or silver. In some examples, the conductive polymer may be a polyphenylene derivative.

Diaphragm

The diaphragm 130 includes a membrane layer with a porous structure, and a material of which includes, but is not limited to, at least one of polyethylene, polypropylene, polyvinylidene fluoride, polyethylene glycol terephthalate, polyimide, or aramid fiber. For example, the diaphragm 130 may be polypropylene porous membrane, a polyethylene porous membrane, a polypropylene non-woven fabric, a polyethylene non-woven fabric, or a polypropylene-polyethylene-polypropylene porous composite membrane, etc.

Electrolyte

The electrolyte has the effect of conducting ions between the positive electrode plate 110 and the negative electrode plate 120. The electrolyte may have one or more states of a gel state, a solid state, and a liquid state. In some examples, the electrolyte adopts an electrolyte solution. The electrolyte solution has the effect of conducting active ions between the positive electrode plate 110 and the negative electrode plate 120. In some examples, the electrolyte solution includes a lithium salt and an organic solvent. The lithium salt may be selected from, but is not limited to, one or more of lithium hexafluorophosphate ($LiPF_6$), lithium tetrafluoroborate ($LiBF_4$), lithium hexafluorarsenate ($LiAsF_6$), lithium perchlorate ($LiClO_4$), lithium tetraphenylborate ($LiB(C_6H_5)_4$), lithium methanesulfonate ($LiCH_3SO_3$), lithium bis(fluorosulfonyl)imide (LiFSI), lithium bis(trifluoromethanesulfonyl)imide (LiTFSI), lithium trifluoromethanesulfonate ($LiCF_3SO_3$), lithium bis(trifluoromethylsulfonyl)imide ($LiN(SO_2CF_3)_2$), lithium tri(trifluoromethylsulfonyl)methide ($LiC(SO_2CF_3)_3$), lithium bis(oxalate)borate (LiBOB), and lithium difluorophosphate ($LiPO_2F_2$). For example, $LiPF_6$ is selected as the lithium salt, because it can provide high ionic conductivity and improve cycle characteristics. The organic solvent may be a carbonate compound, a carboxylate compound, an ether compound, a nitrile compound, another organic solvent, or a combination thereof. Examples of the carbonate compound include, but are not limited to, diethyl carbonate (DEC), dimethyl carbonate (DMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), vinylethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

Referring to FIG. 1, when the battery is in a discharge state, lithium ions 140 are removed from lattices of the anode material, pass through the diaphragm 130 through the electrolyte or the electrolyte solution, and are embedded in lattices of the cathode material. Electrons generated at an anode terminal move to a cathode terminal through an external circuit, and a current is formed by reverse flow of the electrons can provide a power supply for an electrical appliance. On the contrary, referring to FIG. 2, when the battery is charged by applying an external circuit, the lithium ions 140 are removed from the lattices of the cathode material, pass through the diaphragm 130 through the electrolyte or the electrolyte solution, migrate to the anode terminal, and are embedded in the lattices of the anode material. With the reciprocation of the lithium ions 140 between a cathode and an anode, the battery can achieve a discharge and charge process in multiple cycles.

The present application is illustrated in detail below through specific examples and comparative examples. Those skilled in the art should understand that the preparation method described in the present application is only an instance, and any other suitable preparation methods are within the scope of the present application.

Example 1

A method for preparing a cathode material includes the following steps.

S1: A precursor $Ni_{0.6}Co_{0.1}Mn_{0.3}(OH)_2$ with a $D_{50}$ of 4.0 $\mu$m was evenly mixed with $Li_2CO_3$ and $ZrO_2$ at a ratio of 1:1.05:0.0025 to obtain a mixture.

S2: The mixture obtained in S1 was subjected to primary sintering in a dry air atmosphere according to the following temperature settings, wherein the temperature settings sequentially included the following:

a stepwise heating stage 1: 0 °C→0.2 h, 50 °C→0.5 h, 250 °C;

a stepwise heating stage 2: 250 °C→0.5 h, 270 °C→0.5 h, 400 °C;

a stepwise heating stage 3: 400 °C→0.5 h, 420 °C→0.5 h, 550 °C;

a stepwise heating stage 4: 550 °C→0.5 h, 570 °C→0.5 h, 700 °C;

a stepwise heating stage 5: 700 °C→0.5 h, 720 °C→0.5 h, 850 °C;

a stepwise heating stage 6: 850 °C→0.5 h, 830 °C→0.8 h, 920 °C;

a stepwise heating stage 7: 920 °C→1 h, 900 °C→1 h, 970 °C;

and a constant temperature stage: 970 °C→1 h, 950 °C→1 h, 970 °C→1 h, 950 °C→1 h, 970 °C→1 h, 950 °C→1 h, 970 °C→1 h, 950 °C→1 h, 970 °C.

S3: A sintered material obtained in S2 was subjected to pulverization and sieving to obtain a substrate material.

S4: The substrate material obtained in S3 was evenly mixed with $Al_2O_3$ and $Co(OH)_2$ at a weight ratio of 1:0.002:0.04, and subjected to calcination at 850 °C for 8 h, followed by cooling, pulverization, sieving and demagnetization to obtain a cathode material.

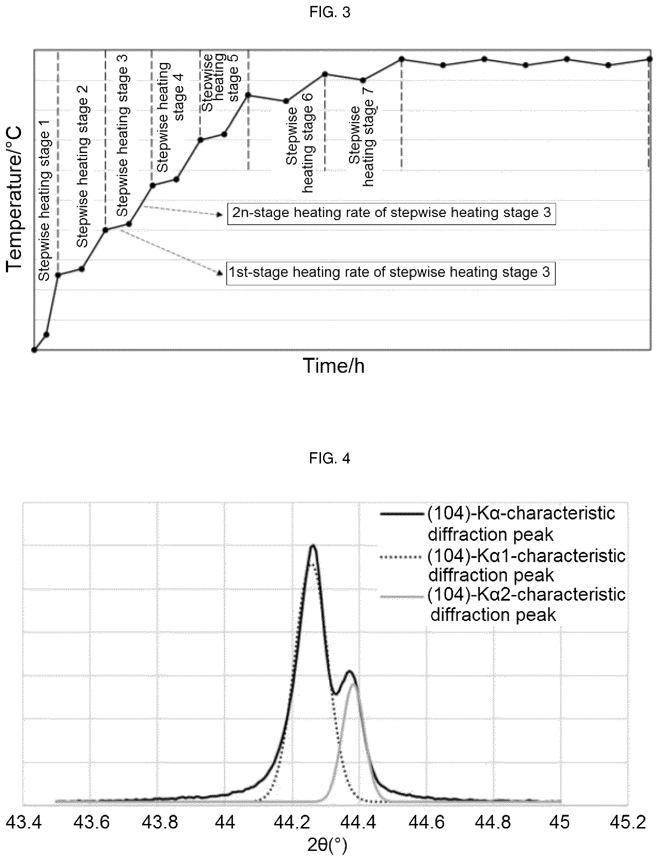

FIG. 3 shows a temperature variation curve diagram of the primary sintering set in the method for preparing a cathode material provided in Example 1 of the present application. Combined with FIG. 3, it can be understood that the above "stepwise heating stage 1: 0 °C→0.2 h, 50 °C→0.5 h, 250 °C" represents that in the current stepwise heating stage, the temperature was raised from 0 °C to 50 °C within 0.2 h, that is, a heating rate was about 250 °C/h; and then the temperature was raised from 50 °C to 250 °C within 0.5 h, that is, a heating rate was about 400 °C/h. Meanwhile, the above "stepwise heating stage 6: 850 °C→0.5 h, 830 °C→0.8 h, 920 °C" represents that in the current stepwise heating stage, the temperature was lowered from 850 °C to 830 °C within 0.5 h, that is, a heating rate was a negative value; and then the temperature was raised from 830 °C to 920 °C within 0.8 h, that is, a heating rate was a non-negative value. On such basis, specific heating or cooling methods of the temperature settings of the present application can be understood.

Example 2

Different from Example 1, in S2, in the temperature settings of the primary sintering:

the stepwise heating stage 6 was adjusted to: 850 °C→1 h, 830 °C→0.8 h, 920 °C;

the stepwise heating stage 7 was adjusted to: 920 °C→0.7 h, 900 °C→1 h, 970 °C; and

the constant temperature stage was adjusted to: 970 °C→8 h, 970 °C.

Example 3

Different from Example 1, in S2, the temperature settings of the primary sintering sequentially included the following:

a stepwise heating stage 1: 0 °C→0.2 h, 50 °C→0.5 h, 250 °C;

a stepwise heating stage 2: 250 °C→0.5 h, 270 °C→0.3 h, 400 °C;

a stepwise heating stage 3: 400 °C→0.6 h, 420 °C→0.4 h, 550 °C;

a stepwise heating stage 4: 550 °C→0.5 h, 570 °C→0.4 h, 700 °C;

a stepwise heating stage 5: 700 °C→0.5 h, 720 °C→0.3 h, 850 °C;

a stepwise heating stage 6: 850 °C→0.5 h, 870 °C→0.5 h, 970 °C;

and a constant temperature stage: 970 °C→1 h, 950 °C→1 h, 970 °C→1 h, 950 °C→1 h, 970 °C→1 h, 950 °C→1 h, 970 °C→1 h, 950 °C→1 h, 970 °C.

Example 4

Different from Example 1, in S2, in the temperature settings of the primary sintering:

the stepwise heating stage 6 was adjusted to: 850 °C→1 h, 830 °C→0.8 h, 920 °C;

the stepwise heating stage 7 was adjusted to: 920 °C→1 h, 900 °C→1 h, 950 °C; and

the constant temperature stage was adjusted to: 950 °C→1 h, 930 °C→1 h, 950 °C→1 h, 930 °C→1 h, 950 °C→1 h, 930 °C→1 h, 950 °C→1 h, 930 °C→1 h, 950 °C.

Example 5

Different from Example 4, in S1, the $D_{50}$ of the precursor was adjusted to 10 $\mu$m.

Example 6

Different from Example 4, in S1, the $D_{50}$ of the precursor was adjusted to 16 $\mu$m.

Example 7

Different from Example 1, in S1, the precursor was changed into $Ni_{0.5}Co_{0.2}Mn_{0.3}(OH)_2$ with a $D_{50}$ of 4.0 $\mu$m; and in S2, in the temperature settings of the primary sintering:

the stepwise heating stage 6 was adjusted to: 850 °C→1 h, 830 °C→0.8 h, 920 °C;

the stepwise heating stage 7 was adjusted to: 920 °C→0.7 h, 900 °C→1 h, 990 °C; and

the constant temperature stage was adjusted to: 990 °C→1 h, 970 °C→1 h, 990 °C→1 h, 970 °C→1 h, 990 °C→1 h, 970 °C→1 h, 990 °C→1 h, 970 °C→1 h, 990 °C.

Example 8

Different from Example 1, in S1, the precursor was changed into $Ni_{0.7}Co_{0.1}Mn_{0.2}(OH)_2$ with a $D_{50}$ of 4.0 $\mu$m, and $Li_2CO_3$ was changed into LiOH•$H_2O$; and in S2, in the temperature settings of the primary sintering:

the stepwise heating stage 6 was adjusted to: 850 °C→1 h, 830 °C→0.8 h, 920 °C;

the stepwise heating stage 7 was adjusted to: 920 °C→0.7 h, 900 °C→1 h, 930 °C; and

the constant temperature stage was adjusted to: 930 °C→1 h, 910 °C→1 h, 930 °C→1 h, 910 °C→1 h, 930 °C→1 h, 910 °C→1 h, 930 °C→1 h, 910 °C→1 h, 930 °C.

Example 9

Different from Example 1, in S1, the precursor was changed into $Ni_{0.8}Co_{0.1}Mn_{0.1}(OH)_2$ with a $D_{50}$ of 4.0 $\mu$m, and $Li_2CO_3$ was changed into LiOH•$H_2O$; and in S2, in the temperature settings of the primary sintering:

the stepwise heating stage 6 was adjusted to: 850 °C→1 h, 830 °C→0.8 h, 860 °C;

the stepwise heating stage 7 was adjusted to: 860 °C→0.7 h, 840 °C→1 h, 870 °C; and

the constant temperature stage was adjusted to: 870 °C→1 h, 890 °C→1 h, 870 °C→1 h, 890 °C→1 h, 870 °C→1 h, 890 °C→1 h, 870 °C→1 h, 890 °C→1 h, 870 °C→1 h, 890 °C.

Example 10

Different from Example 1, in S1, the precursor was changed into $Ni_{0.9}Co_{0.05}Mn_{0.05}(OH)_2$ with a $D_{50}$ of 4.0 $\mu$m,

and $Li_2CO_3$ was changed into $LiOH \cdot H_2O$; and in S2, in the temperature settings of the primary sintering: the stepwise heating stage 6 and the stepwise heating stage 7 were removed, and the constant temperature stage was adjusted to: 850 °C→1 h, 830 °C→1 h, 850 °C→1 h, 830 °C→1 h, 850 °C→1 h, 830 °C→1 h, 850 °C→1 h, 830 °C→1 h, 850 °C→1 h, 830 °C.

Example 11

Different from Example 1, in S1, the precursor was changed into $Ni_{0.9}Co_{0.05}Mn_{0.05}(OH)_2$ with a $D_{50}$ of 4.0 μm, and $Li_2CO_3$ was changed into $LiOH \cdot H_2O$; and in S2, in the temperature settings of the primary sintering: the stepwise heating stage 6 and the stepwise heating stage 7 were removed, and the constant temperature stage was adjusted to: 830 °C→1 h, 850 °C→1 h, 830 °C→1 h, 850 °C→1 h, 830 °C→1 h, 850 °C→1 h, 830 °C→1 h, 850 °C→1 h, 830 °C→1 h, 850 °C.

Comparative Example 1

Different from Example 1, in S2, the temperature settings of the primary sintering were adjusted to: 0 °C→8 h, 950 °C→8 h, 950 °C, that is, the primary sintering was carried out according to a constant heating rate and a constant temperature stage.

Comparative Example 2

Different from Example 1, in S2, the temperature settings of the primary sintering were adjusted to: 0 °C→2 h, 960 °C→8 h, 960 °C, that is, the primary sintering was carried out according to a constant heating rate and a constant temperature stage.

Comparative Example 3

Different from Example 1, in S2, the temperature settings of the primary sintering were adjusted to: 0 °C→4 h, 850 °C→3 h, 850 °C→1 h, 950 °C→8 h, 950 °C.

Comparative Example 4

Different from Example 5, in S2, the temperature settings of the primary sintering were adjusted to: 0 °C→8 h, 950 °C→8 h, 950 °C, that is, the primary sintering was carried out according to a constant heating rate and a constant temperature stage.

Comparative Example 5

Different from Example 6, in S2, the temperature settings of the primary sintering were adjusted to: 0 °C→8 h, 950 °C→8 h, 950 °C, that is, the primary sintering was carried out according to a constant heating rate and a constant temperature stage.

In the present application, the cathode materials in Examples 1-11 and Comparative Examples 1-5 were also prepared into a lithium-on battery, respectively. A preparation method includes the following.

S1. The cathode material, polyvinylidene fluoride (PVDF) (as a binder), acetylene black (as a conductive agent) and polyaniline (PANI) (as a conductive liquid) were dissolved in an N-methylpyrrolidone (NMP) solvent at a weight ratio of 96:2:1:5:0.5, and evenly mixed by full stirring to obtain a positive paste. The resulting positive paste was evenly coated on a positive current collector with a primer paste, and subjected to drying, cold pressing and slitting to obtain a positive electrode plate. According to determination, a surface density of the obtained positive electrode plate was about 350 $g/m^2$, and a compaction density was about 3.5 $g/cm^3$.

S2. Graphite (as an active substance), styrene-butadiene rubber (SBR) (as a binder) and acetylene black (as a conductive agent) were dissolved in a deionized water solvent at a weight ratio of 96:2:2, and then evenly mixed to prepare a negative paste. The resulting negative paste was coated on copper foil, and subjected to drying, cold pressing and slitting to obtain a negative electrode plate. According to determination, a surface density of the obtained negative electrode plate was about 210 $g/m^2$, and a compaction density was about 1.6 $g/cm^3$.

S3. A polyethylene membrane was used as a diaphragm, and a surface of the polyethylene membrane was coated with polyvinylidene fluoride and an alumina coating to improve the bonding force and heat resistance.

S4. Ethylene carbonate (EC), dimethyl carbonate (DMC) and methyl ethyl carbonate (EMC) were mixed at a volume ratio of 1:1:1, and then added into $LiPF_6$ for dissolution to make a concentration of a lithium salt reach 1.1 mol/L to obtain an electrolyte solution. As an additive, the electrolyte solution further contained vinylene carbonate with a mass proportion of 2% and polysulfone with a mass proportion of 1%.

S5. A ratio of a negative capacity to a positive discharge capacity (N/P) of a battery was controlled to 1.16, and an injection amount of the electrolyte solution was 3.2 g/Ah. The positive electrode plate, the diaphragm, the negative electrode plate and the diaphragm were laminated in sequence to make the diaphragm between the positive electrode plate and the negative electrode plate achieve the effect of isolation, which were then wound on a bare core. An electrode lug was welded to the bare core, the bare core was encapsulated into an aluminum shell and then baked to remove water at 80 °C, then the electrolyte solution was injected, and the aluminum shell was sealed to obtain an uncharged battery. Then, the uncharged battery was sequentially subjected to standing, hot and cold pressing, formation, shaping, capacity testing and other processes to obtain a lithium-ion battery.

Property tests

1. Test method of battery capacity: At 25 °C, a battery was charged to 4.3 V (at a charge current of 0.33 C and a constant voltage cutoff current of 0.01 C) in a CCCV mode, subjected to standing for 10 min, and then discharged to 3.0 V (at a discharge current of 0.33 C) in a CC mode. The discharge gram capacity C mAh/g was calculated according to the discharge capacity.

2. Test method of battery rate: After a battery capacity test was completed, at 25 °C, a battery was subjected to standing for 10 min, charged to 4.3 V (at a charge current of 0.33 C and a constant voltage cutoff current of 0.01 C) in a CCCV mode, then subjected to standing for 10 min, and discharged to 3.0 V (at a discharge current of 2.0 C) in a CC mode. The discharge capacity was recorded as $C_R$ mAh/g, and the rate performance was obtained by calculation as $R = C_R/C \times 100\%$.

3. Test method of battery cycle life: At 25 °C, a battery obtained after formation and grading was charged to 4.3 V (at a charge current of 1.0 C and a constant voltage cutoff current of 0.1 C) in a CCCV mode, subjected to standing for 10 min, discharged to 3.0 V (at a discharge current of 1.0 C) in a CC mode to obtain an initial gram capacity of C1 mAh/g, and then subjected to standing for 10 min. Then, the battery was repeatedly charged in the CCCV mode and discharged in the CC mode until the discharge gram capacity was lower than 0.8*C1 mAh/g. The cumulative discharge number was recorded as the cycle life L.

4. Test method of the tap density of a cathode material: According to GB/T5162-1985 Metallic powders-Determination of tap density, a test result was recorded as T g·cm$^{-3}$.

5. Test method of the particle size $D_{50}$ of a cathode material: Testing was carried out with reference to GB/T 19077-2016. A laser particle size analyzer can be used for determination conveniently, such as a Mastersizer 3000 laser particle size analyzer from Malvern Instruments Ltd. of the United Kingdom. A test result was recorded as P μm.

6. Test method of nNi of a cathode material: Testing was carried out with reference to GB/T 24194-2009. An inductively coupled plasma-optical emission spectrometer (ICP-OES) can be used for determination conveniently, such as Agilent Model 5110 ICP-OES. According to determination by ICP, the molar mass of element Ni was $N_{Ni}$, the molar mass of element Co was $N_{Co}$, the molar mass of element M1 was $N_{M1}$ and the molar mass of element M2 was $N_{M2}$. The molar proportion of element Ni in all metallic elements except for element Li was that $n_{Ni} = N_{Ni}/N_{Ni} + N_{Co} + N_{M1} + N_{M2}$.

7. XRD test of a cathode material: The cathode material was determined by an XRD ray to obtain a characteristic peak corresponding to a crystal surface (104) of the cathode material. The characteristic peak was subjected to peak splitting to obtain two diffraction peaks, namely (104)-K$\alpha$1 and (104)-K$\alpha$2, respectively. The (104)-K$\alpha$1 and (104)-K$\alpha$2 diffraction peaks had the peak position of Q1 and Q2, respectively, and had the full width at half maximum of FWHM1 and FWHM2, respectively. Then, the resolution $\alpha$ was obtained by calculation with the following formula:

$$\alpha = \frac{2 \times (Q2 - Q1)}{FWHM1 + FWHM2};$$

wherein XRD test conditions included: a Cu target, a voltage of 40 kV, a current 40 of Ma, a scanning range of 43.5° to 45°, a step size of 0.02°, and a scanning rate of 2 °/min. A peak splitting method included: selecting XRD test data in Origin8.5 software→carrying out mapping in a Line mode→removing the baseline (selecting Manual option from Peaks and baseline→Peak Analyzer→Opening Dialog→Recalculate options in Analysis window, selecting Fit Peaks(Pro) from Goal option→clicking on Next→selecting Constant from Baseline Mode option, Constant=Minimum→clicking on Next)→carrying out peak splitting (unchecking Auto Subtract Baseline option and Auto Rescale option, checking Fix baseline Parameters option, clicking on Next→unchecking Enable Auto Find, checking Smoothing Window Size option in Peak Finding Settings as Auto, selecting Direction option as Positive, selecting Method as Local Maximum, setting Local Points parameters as 2, selecting Method in Peak Filtreing as By Number, changing Number of Peaks to 2→clicking on Find→clicking on Next)→carrying out fitting modification (selecting Method in Weight as NoWeightin, selecting Max. Number of Iterations in Fit Control as 50, selecting Tolerance as 0.05→clicking on Fit)→*clicking on Finish. After the above operations were completed, the values of Q1, Q2, FWHM1 and FWHM2 were obtained in a peak splitting report.

Taking Example 1 as an example, referring to FIG 4, the characteristic peak of the crystal face (104) of the cathode material is of a bilaterally asymmetrical structure, and the two diffraction peaks obtained after the peak splitting are of a bilaterally symmetrical structure, that is, diffraction peak curves are in normal distribution.

In the present application, the value of $T - (1.04\alpha - 0.25\alpha^2 + 0.004P^2 - 0.02P)$ was recorded as E, the value of $C - (100n_{Ni} - \alpha^2 P)$ was recorded as H, and the value of $L - (2245\alpha - 5000n_{Ni} + 100P)$ was recorded as F. The above test or calculation results are shown in Table 1 for reference.

Table 1. Test results of parameters of cathode materials and properties of lithium-on batteries in Examples 1-11 and Comparative Examples 1-5 of the present application

| Serial number | P (µm) | α | T (g·cm⁻³) | C (mAh·g⁻¹) | R(%) | L | E | H | F |
|---|---|---|---|---|---|---|---|---|---|
| Example 1 | 3.9 | 1.0 | 1.95 | 186.0 | 94 | 1745 | 1.18 | 129.9 | 2110 |
| Example 2 | 4.0 | 1.3 | 2.10 | 183.2 | 93 | 2419 | 1.19 | 130.0 | 2101 |
| Example 3 | 3.6 | 2.0 | 2.24 | 180.1 | 94 | 3990 | 1.18 | 134.5 | 2140 |
| Example 4 | 4.8 | 0.7 | 1.83 | 187.6 | 93 | 1172 | 1.23 | 130.0 | 2121 |
| Example 5 | 10.5 | 0.7 | 2.04 | 185.1 | 91 | 1672 | 1.20 | 130.2 | 2051 |
| Example 6 | 15.2 | 0.7 | 2.40 | 182.7 | 90 | 2172 | 1.17 | 130.1 | 2081 |
| Example 7 | 4.5 | 1.3 | 2.15 | 173.2 | 92 | 2919 | 1.23 | 130.8 | 2051 |
| Example 8 | 3.8 | 1.2 | 2.12 | 193.2 | 91 | 1719 | 1.25 | 128.7 | 2145 |
| Example 9 | 3.7 | 1.2 | 2.16 | 203.2 | 92 | 1119 | 1.29 | 128.5 | 2055 |
| Example 10 | 3.6 | 1.1 | 2.18 | 213.2 | 91 | 520 | 1.36 | 127.6 | 2191 |
| Example 11 | 3.5 | 1.1 | 2.17 | 214.3 | 92 | 550 | 1.33 | 128.9 | 2137 |
| Comparative Example 1 | 4.2 | 0.6 | 1.50 | 193.2 | 87 | 430 | 0.98 | 136.7 | 1663 |
| Comparative Example 2 | 6.2 | 2.2 | 1.96 | 153.6 | 86 | 4230 | 0.85 | 123.6 | 1671 |
| Comparative Example 3 | 3.9 | 0.5 | 1.41 | 193.7 | 88 | 303 | 0.97 | 136.7 | 1791 |
| Comparative Example 4 | 9.8 | 0.5 | 1.62 | 192.8 | 86 | 825 | 0.97 | 137.3 | 1723 |
| Comparative Example 5 | 15.3 | 0.5 | 1.98 | 191.5 | 85 | 973 | 0.89 | 136.3 | 1321 |

Referring to Table 1, the cathode material precursors and the lithium sources are sintered through the specific temperature settings in Examples 1-11, and temperature changes of the multiple stepwise heating stages and the constant temperature stage in the temperature settings are used to control the particle size of the resulting cathode materials and appropriately increase internal defects of particles, such that the cathode materials with the resolution α within the preset range are obtained. The interiors of the particles of these cathode materials are suitable for diffusion of lithium ions and have good particle strength, and are thus conducive to reducing the phenomenon of polarization of the cathode materials and improving the resistance to cracking or pulverization, thereby maintaining good capacity, rate performance and cycle stability. In addition, the E, H and F values of these cathode materials also fall within the preset range, such that these cathode materials have both better cycle stability and rate performance.

From Examples 1-4, specific impacts of the above temperature settings on the particle size and internal defects of the cathode materials can be further seen. Compared with Example 1, the temperature fluctuation in the constant temperature stage in Example 2 is relatively smaller, and the growth of particles of the cathode material in this treatment stage is relatively stable, such that the particle size of the cathode material is increased, and the resolution α is increased, indicating that within a certain primary particle number range, the cycle life of the cathode material can be prolonged by increasing the primary particle size. Compared with Example 1, the stepwise heating stages in Example 3 have a relatively larger heating rate, which promotes the production of more internal defects in particles of the cathode material in this treatment stage, such that the resolution $\alpha$ is increased, indicating that within a certain primary particle number range, the cycle life of the cathode material can be further prolonged by increasing the internal defects of the cathode material. Compared with Example 1, the temperature in the constant temperature stage in Example 4 is relatively lower, and the growth rate of particles of the cathode material in this treatment stage is relatively low, such that the particle size of the cathode material is decreased, and the resolution $\alpha$ is decreased, indicating that within a certain primary particle number range, the cycle life of the cathode material can be shortened by decreasing the primary particle size.

From Examples 1-4, it can also be seen that with the increase of the resolution $\alpha$, the tap density T of the cathode material is increased, the gram capacity C is decreased, and the cycle life L is increased. All of the tap density T of the cathode material, the gram capacity C and the cycle life L have a good correlation with the resolution $\alpha$. Therefore, controlling the resolution $\alpha$ is conducive to improving the particle strength of the cathode material and reducing the phenomenon of polarization of the cathode material, such that the cathode material has both better cycle stability and rate performance.

Comparing Comparative Examples 1-3 with Example 1, comparing Comparative Example 4 with Example 5 and comparing Comparative Example 5 with Example 6, it is shown that since the above temperature settings of the multiple stepwise heating stages and the constant temperature stage are not used for sintering, the temperature fluctuation in the sintering process is obviously lower, leading to obvious insufficient internal defects of cathode material particles. In Comparative Examples 1, 3, 4 and 5, although the P value of the obtained cathode materials is similar to that in corresponding examples, the resolution $\alpha$ is too small due to the obvious insufficient internal defects of cathode material particles. However, in Comparative Example 2, since a sufficient number of crystal nuclei that are not fully formed enter the high temperature stage after experiencing a short low temperature time, the grain size of the finally obtained cathode material is too large, and the corresponding P value is obviously greater than that in Example 1, such that cathode material particles also have fewer internal defects, and the resolution $\alpha$ is too large due to the impact of the too large grain size. Therefore, the resolution $\alpha$ of the cathode materials in Comparative Examples 1-5 falls out of the preset range of the present application, and these cathode materials are difficult to have both better cycle stability and rate performance.

The above embodiments are used only to illustrate the technical solutions of the present application, rather than to limit the present application. Although the present application has been illustrated in detail with reference to the above preferred embodiments, those of ordinary skill in the art shall understand that modifications or equivalent substitutions of the technical solutions of the present application can be made without departing from the spirit and scope of the technical solutions of the present application.

**Claims**

1. A cathode material, wherein the cathode material is a lithium nickel cobalt oxide composite oxide; and
   in an XRD pattern of the cathode material, a characteristic peak of a crystal face (104) comprises a (104)-K$\alpha$1 diffraction peak and a (104)-K$\alpha$2 diffraction peak after peak splitting, a separation value between the (104)-K$\alpha$1 diffraction peak and the (104)-K$\alpha$2 diffraction peak is $\alpha$, and

$$0.7 \leq \alpha \leq 2.0.$$

2. The cathode material according to claim 1, wherein a tap density of the cathode material is T g/cm$^3$, a median particle size $D_{50}$ of the cathode material is P $\mu$m, and

$$1 \leq T - (1.04\alpha - 0.25\alpha^2 + 0.004P^2 - 0.02P) \leq 1.5.$$

3. The cathode material according to claim 1, wherein a gram capacity of the cathode material is C mAh/g, a median particle size $D_{50}$ of the cathode material is P $\mu$m, a molar proportion of element Ni in all metallic elements except for element Li in the cathode material is $n_{Ni}$, and

$$125 \leq C - (100n_{Ni} - \alpha^2 P) \leq 135.$$

4. The cathode material according to claim 1, wherein a cycle life number of the cathode material under the conditions of charge to 4.3 V at a current of 1.0 C and discharge to 3.0 V at a current of 1.0 C is L, a median particle size $D_{50}$ of the

cathode material is P $\mu$m, a molar proportion of element Ni in all metallic elements except for element Li in the cathode material is $n_{Ni}$, and

$$1800 \leq L - (2245\alpha - 5000n_{Ni} + 100P) \leq 2400.$$

5. The cathode material according to claim 1, wherein a tap density of the cathode material is T g/cm³, and

$$1.7 \leq T \leq 2.5.$$

6. The cathode material according to claim 1, wherein a gram capacity of the cathode material is C mAh/g, and

$$140 \leq C \leq 230.$$

7. The cathode material according to claim 1, wherein a cycle life number of the cathode material under the conditions of charge to 4.3 V at a current of 1.0 C and discharge to 3.0 V at a current of 1.0 C is L, and

$$300 \leq L \leq 6000.$$

8. The cathode material according to claim 1, wherein a median particle size $D_{50}$ of the cathode material is P $\mu$m, and

$$3 \leq P \leq 16.$$

9. The cathode material according to claim 1, wherein a molar proportion of element Ni in all metallic elements except for element Li in the cathode material is $n_{Ni}$, and

$$0.33 \leq n_{Ni} \leq 1.$$

10. The cathode material according to claim 1, wherein the cathode material is a single-crystal cathode material.

11. The cathode material according to claim 1, wherein a general chemical formula of the cathode material is $Li_aNi_{x-}Co_yM1_zM2_kO_2$, M1 comprises one or two of Mn and Al, M2 comprises one or more of Ni, Co, Mn, Na, K, Mg, Ca, Sr, Al, Ti, Y, Zr, W, Nb, Ce, La, and Dy, and

$$0.9 < a \leq 1.1$$

$$0.33 \leq x \leq 1$$

$$0 \leq y \leq 0.33$$

$$0 < z < 0.33$$

$$0 \leq k < 0.1$$

$$x + y + z + k = 1.$$

12. A method for preparing a cathode material, wherein the preparation method comprises:

mixing a precursor with a lithium source to obtain a mixture; and
subjecting the mixture to primary sintering and pulverization to obtain a cathode material;
the primary sintering comprises N stepwise heating stages and M constant temperature stages that are sequentially carried out, N is greater than or equal to 3, and M is greater than or equal to 1; and
the stepwise heating stages comprise n heating sub-stages, n is greater than or equal to 2, when n is greater than 1, a heating rate of the n-th heating sub-stage is greater than that of the 1st heating sub-stage in the same stepwise heating stage, and the heating rate of the n-th heating sub-stage is a non-negative value.

**13.** The preparation method according to claim 12, wherein the preparation method meets at least one of the following conditions:

(1) a maximum temperature of the stepwise heating stages is 700 °C to 1,000 °C;

(2) a time of the stepwise heating stages is 6 h to 14 h;

(3) a temperature of the constant temperature stages is $(1,150-500n_{Ni})$ °C to $(1,150-280n_{Ni})$ °C, and $n_{Ni}$ represents a molar proportion of element Ni in all metallic elements except for element Li in the cathode material; and

(4) the constant temperature stages comprise cooling sub-stages and heating sub-stages that are alternately carried out, and a temperature of the cooling sub-stages in the constant temperature stages is lower than that of the adjacent heating sub-stages.

**14.** The preparation method according to claim 12, wherein after the pulverization, the method further comprises: mixing a product of the primary sintering with a coating agent, and carrying out secondary sintering, wherein elements of the coating agent comprise one or more of Ni, Co, Mn, Na, K, Mg, Ca, Sr, Al, Ti, Y, Zr, W, Nb, Ce, La, and Dy.

**15.** A secondary battery, wherein the secondary battery comprises the cathode material according to any one of claims 1 to 11 or a cathode material prepared by the preparation method according to any one of claims 12 to 14.

FIG. 1

FIG. 2

FIG. 3

FIG. 4

## INTERNATIONAL SEARCH REPORT

| International application No. |
|---|
| **PCT/CN2024/130285** |

| A. | CLASSIFICATION OF SUBJECT MATTER |
|---|---|

H01M4/36(2006.01)i; H01M10/0525(2010.01)i; H01M4/525(2010.01)i

According to International Patent Classification (IPC) or to both national classification and IPC

| B. | FIELDS SEARCHED |
|---|---|

Minimum documentation searched (classification system followed by classification symbols)

IPC:H01M4/-; H01M10/-

Documentation searched other than minimum documentation to the extent that such documents are included in the fields searched

Electronic data base consulted during the international search (name of data base and, where practicable, search terms used)

CJFD, CNTXT, DWPI, USTXT, VEN, WPABS, ISI_Web of Science: 分离, 分离度, 峰, 恒温, 阶梯升温, 镍, 镍钴酸锂, 升温, 衍射, 正极, 钴, 锂, 104, "104", positive electrode, battery, lithium nickel cobalt oxide, XRD, peak, divid?, separation degree

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117747776 A (BTR (JIANGSU) NEW MATERIAL TECHNOLOGY CO., LTD.) 22 March 2024 (2024-03-22)<br>claims 1-10 | 1-15 |
| A | CN 102157725 A (CHENGDU JINGYUAN NEW MATERIALS TECHNOLOGY CO., LTD.) 17 August 2011 (2011-08-17)<br>description, paragraphs 0004-0008 | 1-15 |
| A | CN 115832241 A (BEIJING EASPRING MATERIAL TECHNOLOGY CO., LTD.) 21 March 2023 (2023-03-21)<br>entire document | 1-15 |
| A | CN 116443952 A (SUNWODA ELECTRIC VEHICLE BATTERY CO., LTD.) 18 July 2023 (2023-07-18)<br>entire document | 1-15 |
| A | CN 114243014 A (GUANGDONG BRUNP RECYCLING TECHNOLOGY CO., LTD. et al.) 25 March 2022 (2022-03-25)<br>entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 January 2025** | **23 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/130285** |

### C. DOCUMENTS CONSIDERED TO BE RELEVANT

| Category* | Citation of document, with indication, where appropriate, of the relevant passages | Relevant to claim No. |
| --- | --- | --- |
| A | US 2023327090 A1 (HUAWEI TECHNOLOGIES CO., LTD.) 12 October 2023 (2023-10-12) entire document | 1-15 |
| A | JP 2021184372 A (SUMITOMO METAL MINING CO., LTD.) 02 December 2021 (2021-12-02) entire document | 1-15 |

Form PCT/ISA/210 (second sheet) (July 2022)

International application No.

**PCT/CN2024/130285**

| Patent document cited in search report | | | Publication date (day/month/year) | Patent family member(s) | | | Publication date (day/month/year) |
|---|---|---|---|---|---|---|---|
| CN | 117747776 | A | 22 March 2024 | None | | | |
| CN | 102157725 | A | 17 August 2011 | None | | | |
| CN | 115832241 | A | 21 March 2023 | None | | | |
| CN | 116443952 | A | 18 July 2023 | None | | | |
| CN | 114243014 | A | 25 March 2022 | None | | | |
| US | 2023327090 | A1 | 12 October 2023 | EP | 4235858 | A1 | 30 August 2023 |
| | | | | WO | 2022105259 | A1 | 27 May 2022 |
| | | | | JP | 2023550443 | A | 01 December 2023 |
| JP | 2021184372 | A | 02 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 51621985 T
- GB 190772016 T
- GB 241942009 T